# EUROPEAN PATENT SPECIFICATION

(11) **EP 4 239 558 B1**
(45) Date of publication and mention of the grant of the patent: **16.10.2024**
(21) Application number: 23159647.9
(22) Date of filing: 02.03.2023
(51) Int. Cl.: G06Q 30/02, G10L 13/08, H04N 21/81, G11B 27/30, G06F 3/16

(54) **METHOD AND SYSTEM FOR INSERTING MULTIMEDIA CONTENT WHILE PLAYING AN AUDIO TRACK GENERATED FROM A WEBSITE**
VERFAHREN UND SYSTEM ZUM EINFÜGEN VON MULTIMEDIA-INHALTEN WÄHREND DER ABSPIELUNG EINES VON EINER WEBSITE ERZEUGTEN AUDIO-TRACKS
PROCÉDÉ ET SYSTÈME D'INSERTION DE CONTENU MULTIMEDIA PENDANT LA LECTURE D'UNE PISTE AUDIO GÉNÉRÉE À PARTIR D'UN SITE WEB

(30) Priority: 02.03.2022 IT 202200003896
(43) Date of publication of application: 06.09.2023
(73) Proprietor: Audioboost Srl, 73024 Maglie (LE) (IT)
(72) Inventor: BALLERINI, Enrico, I-25080 Muscoline (BS) (IT)
(74) Representative: Metroconsult Srl

(56) References cited:
- US-A1- 2007 282 607
- US-A1- 2021 110 811

## Description

### Field of the invention

The present invention relates, in general, to a method and a system for speech synthesis from text. In particular, the present invention relates to a method and a system for speech synthesis from text which permits inserting a multimedia element in an audio track generated from a text.

### Description of the prior art

Several systems and methods for speech synthesis from text are known in the art. Speech synthesis from text is achieved by means of suitable software tools such as, for example, the *Speech Synthesis Markup Language* (SSML). As is known, such language permits converting text into speech, thus creating an audio track.

As is known, advertisements are often inserted during the reproduction of an audio track. In particular, considering a generic audio track being played by a device, the reproduction of the audio track is interrupted and an advertisement is played; at the end of the advertisement, the previously paused audio track is resumed.

The Applicant has observed that advertisements are inserted, for example, prior to the reproduction of an audio track or at the end of the reproduction of an audio track. Disadvantageously, both cases have some drawbacks. For example, the user may decide to not listen to the audio track because he/she does not want to hear the advertisement at the beginning of the audio track, or may stop the audio track before the end to avoid hearing the advertisement.

A further alternative is to insert the advertisement during the reproduction of the audio track, after a certain time interval. This approach has several criticalities: for example, when inserting a pause after a predetermined time interval there is a risk of truncating a word or inserting an advertisement during an articulated discourse, thus causing misunderstanding and/or loss of attention by the user.

Document US 2021366463 A1 describes a method for generating speech from text (*text-to-speech*). Such system comprises a recurrent neural network configured to: receive a sequence of characters in a particular natural language; process said sequence of characters to generate a spectrogram of a verbal utterance of the sequence of characters in the particular natural language.

Document US 2021241753 A1 describes a text-to-speech engine configured to create audio output that includes synthesized speech and one or more media content item snippets. The input text is obtained and partitioned into text sets. A track having lyrics that match a part of one of the text sets is identified. The location of the track's audio that contains the lyric is extracted based on forces alignment data. The extracted audio is combined with synthesized speech corresponding to the remainder of the input text to form audio output.

Document US 2021343269 A1 describes a client system that sends to a server system a request for an audio presentation and receives a manifest from the server system. Such manifest indicates a plurality of segment-specific retrieval locations in which a segment-specific retrieval location is indicated for each segment of a plurality of text-to-speech audio segments of the audio presentation. For each audio segment thus located, the client computing system identifies a presentation order of the audio segment within the audio presentation; sends to the server system a segment request for the text-to-speech audio segment at the segment-specific retrieval location for that text-to-speech audio segment; receives from the server system the text-to-speech audio segment responsive to the segment request for that text-to-speech audio segment; and outputs the text-to-speech audio segment in the identified presentation order.

### Brief description of the invention

It is the object of the present invention to provide a method for inserting a multimedia content during the playing of an audio track generated from a text.

Said method comprising:
- providing a web page comprising a text to be played as audio;
- identifying a plurality of characters in said text to be played as audio, each character corresponding to a respective reading pause;
- generating a list of markers, each marker in said list of markers corresponding to a respective character of said plurality of characters;
- generating a second text, as a function of said text to be played, suitable for being converted into an audio track;
- generating:
   - an audio track as a function of said second text by means of a text-to-speech conversion system; and
   - associating with each marker in said list of markers a respective variable indicating the secondage at which a respective character, and hence a respective reading pause, occurs during the playing said audio track;
- selecting a secondage associated with a respective marker;
- playing said audio track; pausing said audio track at said selected secondage;
- playing a multimedia content;
- resuming the playing of said audio track.

Preferably, said text to be played as audio comprises a title and an article body comprising one or more of the following elements: a period of text, a paragraph of text; and/or a bullet list. Preferably, at least one of said elements comprises a beginning and an end, each end being identified as a reading pause.

Preferably, said generating an audio track as a function of said second text comprises:
- dividing said second text into a plurality of text segments, each text segment terminating at a character identifying a reading pause;
- generating a plurality of audio segments, each audio segment being associated with a respective text segment.

Alternatively, said generating said second text as a function of said text to be played comprises inserting a secondage tag at each character associated with a marker.

Preferably, said providing a text to be played as audio comprises:
- opening a *Uniform Resource Locator* to a web page;
- identifying elements of text to be played as audio on said web page.

Said selecting a secondage associated with a respective marker comprises:
- providing a predetermined waiting time;
- selecting the marker wherein the respective variable indicates the secondage closest to said predetermined waiting time.

Preferably, said multimedia content is a video advertisement or an audio advertisement.

According to a further aspect, the present invention provides a system for inserting a multimedia content during the playing of an audio track generated from a text.

Said system comprises a device configured to send a URL of a web page containing text to be played as audio to a server.

Said server is configured for:
- receiving said URL;
- identifying a text to be played as audio on said web page;
- identifying a plurality of characters or tags in said text, each character or tag corresponding to a respective reading pause;
- transforming said text into a second text suitable for generating an audio track;
- generating a list of markers, each marker corresponding to a respective character of said plurality of characters;
- converting said second text into an audio track by means of a text-to-speech conversion system;
- associating with each marker in said list of markers a respective variable indicating a secondage at which a respective character, and hence a respective reading pause, occurs during the playing of said audio track;
- sending said audio track and said list of markers to said device.

Said device is further configured for:
- selecting a time instant associated with a respective marker;
- playing said audio track; pausing said audio track at said selected time instant;
- playing a multimedia content;
- resuming the playing of said audio track from said selected time instant.

### Brief description of the drawings

The invention will become more apparent in light of the following detailed description, provided merely by way of non-limiting example, wherein reference will be made to the annexed drawings, wherein:
- Figure 1 is a flow chart of a method for inserting a multimedia content in an audio track generated from a text;
- Figure 2 is a schematic view of a generic web page;
- Figure 3 is a diagram of a system configured for inserting a multimedia content in an audio track generated from a text;
- Figure 4 is an illustrative diagram of an audio track and a list of parameters generated starting from a text according to the present invention;
- Figure 5 shows an illustrative phonogram;
- Figure 6 shows the phonogram of Figure 5 wherein a multimedia content is inserted during the reproduction of the audio file.

The drawings are not in scale.

### Detailed description

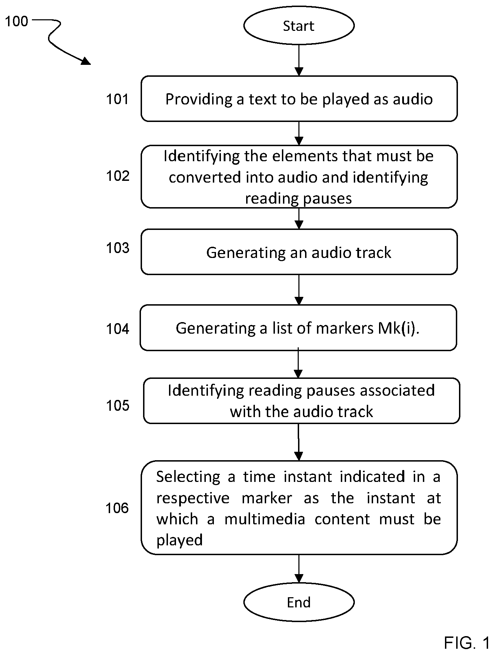

With reference to Figure 1, the present invention provides a speech synthesis method 100. In particular, the method 100 permits converting a text into speech while allowing the insertion of a multimedia content in an audio track generated from such text.

According to the method 100, during an initial step 101 a text to be played as audio is provided. For example, such text may be the text of an article available on a page 200 of an Internet site.

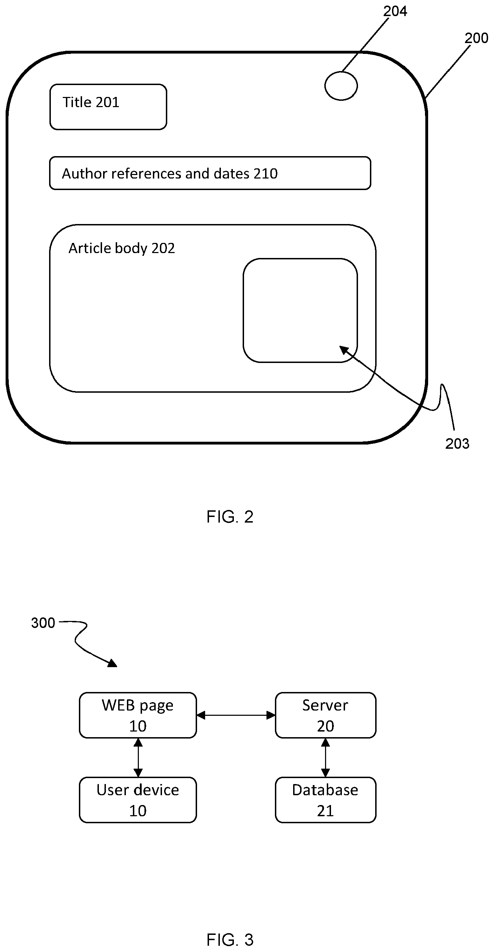

As shown in Figure 2, a page 200 of a web site includes several elements. Some elements belong to the article, such as, for example, a title 201, an article body 202, images or videos 203; whereas other elements do not belong to the article, such as, for example, logos and navigation menus 204; references to the author and the date of publication 210; references to social sharing; other multimedia elements, such as images, photo galleries and videos; advertising elements; related articles; comments section; elements not visible to the user, navigation buttons, etc.

For example, at step 101 the text of the article to be played as audio can be retrieved by providing a link to the page 200 that contains the article, particularly by providing a URL of the article.

Once a link to the page 200 has been obtained, a step 102 is started. During step 102, the elements that make up the page 200 to be converted into audio (i.e. those elements of the article that must be subjected to a speech synthesis process) are identified. For example, the tags of each element are identified, thus locating a text to be played as audio. Such text may comprise, for example, the elements belonging to the article, e.g. the title 201 and/or the article body 202.

During step 102, characters or tags corresponding to a reading pause are also identified within the text to be played as audio. Preferably, the characters or tags corresponding to a reading pause can be selected among: a tag indicating the end of the title 201 of the article 202, a character or a tag identifying the end of a period contained in the article body 202; a character or a tag indicating the end of a paragraph contained in the article body 202; and/or a character or a tag indicating the end of a bullet list contained in the article body.

For example, such characters or tags may be a punctuation character (e.g. the full stop character, ".", or the semicolon character, ";") within the text or an HTML tag (or a tag of another programming language) in the code of the page 200. In particular, by way of non-limiting example, the HTML tags may be the following: <p>, <div>, <li>, <ul>, <blockquote>.

Preferably, in order to prevent the inserted multimedia elements (e.g. audio or video advertisements) from truncating sentences or concepts in the synthesized narration, the markers Mk(i) preferably also identify:
i. a comma "," within the text; and/or
ii. an aside within the text.
For example, a comma is identified by means of the comma character, ","; an aside within the text can be identified by means of a suitable tag or by means of the dash character,"-".

The Applicant observes that reading pauses identified by a character "," permit identifying coordinate clauses.

At the end of step 102, an audio track generation step 103 is started. In particular, during step 103 the text identified in the previous step (i.e. the article parts selected on the page 200) is converted into a second text file suitable for being converted, by means of a text-to-speech system, into an audio track. For example, the second text is a text/file in the Speech Synthesis Markup Language (SSML) format.

Preferably, the generation of the second text occurs by degrees:
- the main language in which the text was written is identified;
- optionally, any words in languages other than the main language are identified in the text;
- optionally, any abbreviations, names of famous people, company names and trademarks are identified;
- titles, quotations, bullet lists are identified.

For example, the second text is an SSML text. The Applicant points out that the conversion of an SSML format into an audio track is known, and will not therefore be further described herein.

At step 103, a reading pause recognition step 104 is also started. In particular, during step 104 each character or tag associated with a reading pause in the text is identified.

Preferably, when the second text is an SSML text, a secondage tag is inserted at each character or tag associated with a reading pause in the second text. In particular, the term "secondage tag" refers to a special tag which, once read and interpreted by means of a text-to-speech system, permits obtaining the secondage corresponding to such secondage tag.

Subsequently, at step 105 a list of markers Mk(i) is generated. Each marker Mk(i) corresponds to a respective character or tag associated with a reading pause and comprises a variable T(i). The variable T(i) indicates the secondage at which such character or tag, and hence the respective reading pause, occurs during the playing of the audio track generated at step 103.

For example, when the second text is an SSML text, each variable T(i) corresponds to a secondage received from the text-to-speech conversion system.

Preferably, each marker Mk(i) comprises an identification key. Even more preferably, each marker Mk(i) corresponding to one same character or tag is identified by means of the same identification key. In other words, markers corresponding to a list end tag are identified by a first identification key; markers corresponding to a paragraph end are identified by a second identification key, etc.

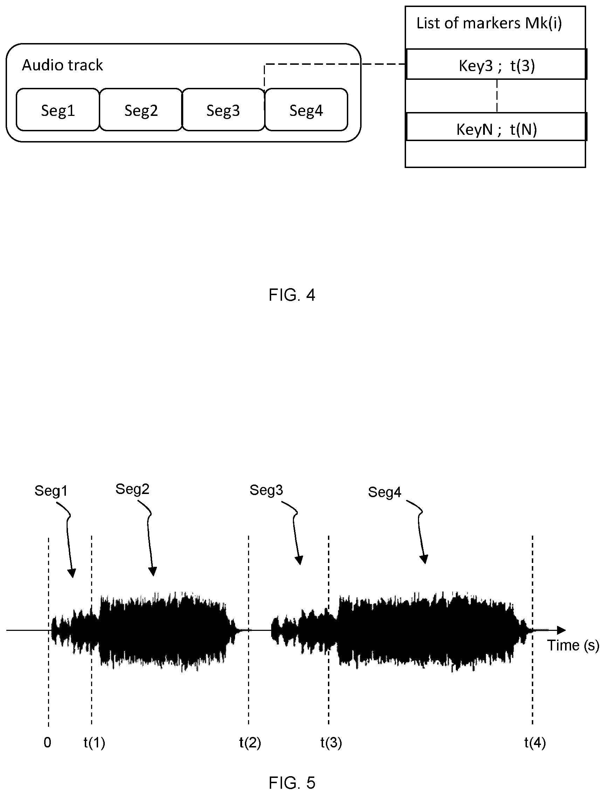

With reference to Figure 4, according to an alternative embodiment, in order to generate the list of markers Mk(i) the text to be played as audio is preferably divided into a plurality of text segments. For example, each text segment terminates at a character or tag identifying a reading pause. Subsequently, using known techniques, a plurality of audio segments seg1, seg2, seg3, seg4 are generated, each audio segment seg1, seg2, seg3, seg4 being associated with a respective text segment.

It should be noted that the duration of each text segment substantially corresponds to the point where there is a reading pause.

It must be pointed out that each secondage in said list corresponds to a respective point of the audio track where there is a reading pause. The Applicant observes that, once the playing of the audio track (or of each segment of the audio track) has begun, it will be sufficient to select a secondage corresponding to a marker and pause the audio track at that time instant, play a multimedia content (e.g. an audio advertisement or a video advertisement), and then resume the playing of the audio track from the selected time instant. In this way, the multimedia content will be reproduced without truncating any word, thus allowing the audio track to be listened to without any unpleasant cuts and permitting a correct understanding of the article's content.

In the following, a respective secondage will also be referred to as "advertisement pause".

Preferably, according to the present invention, the selection of an advertisement pause occurs as follows:
- requesting a predetermined waiting time, e.g. provided according to the preferences of the owner of the web page that contains the page 200;
- selecting the marker Mk(i) wherein the respective time variable t(i) indicates the time instant closest to said predetermined waiting time, preferably the subsequent time instant which is closest to said predetermined waiting time.

According to a further aspect, the present invention provides a system 300 suitable for executing the above-described method 100.

The system 300 comprises a client device 10 and a server 20 in mutual communication. As aforementioned, the server 20 comprises a text-to-speech conversion system. Alternatively, the server 20 may be connected to an external text-to-speech conversion system. As is known, text-to-speech conversion systems are configured for receiving a file/text, e.g. an SSML text, and for generating, as a function of such file/text, a respective audio track.

The device 10 comprises, or can be connected to, audio reproduction means (e.g. loudspeakers, earphones, headsets, or integrated loudspeakers), not shown.

The device 10 is configured to send a URL of a web page 200 containing text to be played as audio to the server 20. As previously described herein, such text to be played comprises text parts included in the page 200.

The server 20 is configured to receive the URL of the web page and identify a text to be played as audio contained in the web page. In particular, the server 20 opens the URL of the web page and accesses the code of such page 200; this identification is carried out, for example, by means of characters or tags included in the code of the page 200.

The server 20 is further configured to identify a plurality of characters or tags associated with the text to be read.

Preferably, each character or tag corresponds to a respective reading pause identified as described above. Such text is then converted, by means of a known algorithm, into a file suitable for generating an audio track of said text.

According to the present invention, the server 20 generates a list of markers Mk(i). As previously described herein, each marker Mk(i) corresponds to a respective character or a respective tag. Each marker Mk(i) is associated with a variable indicating the secondage at which the respective character or the respective tag occurs during the playing of the audio track generated as described above. The server 20 sends such file and such list of markers Mk(i) to the device 10.

The device 10 is further configured to select a time instant associated with a respective marker Mk(i). This selection occurs as a function of a predetermined waiting time Ta.

The selected marker Mk(i) is the one in which the respective time variable indicates the time instant closest to the predetermined waiting time Ta.

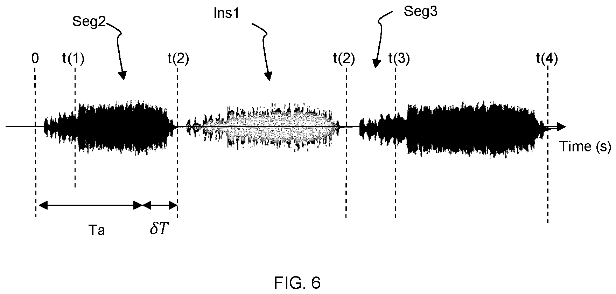

As shown in Figures 5 and 6, the device 10 is further configured to play the audio track generated as described above by means of such audio reproduction means.

In particular, the device 10 begins playing the audio track, and then interrupts such reproduction after a time interval corresponding to the predetermined waiting time Ta plus a time interval ***δT,*** which may be either positive or negative - preferably positive - (i.e. said reproduction is interrupted at a time instant t(i) associated with the selected marker Mk(i)), and plays a multimedia content ins1, such ad a video or audio advertisement.

At the end of the multimedia content ins1, the device resumes the playing of said audio track from said selected time instant.

## Claims

1. A method (100) for inserting a multimedia content (ins1) during the playing of an audio track generated from a text, said method (100) comprising:
- providing a web page comprising a text to be played as audio;
- identifying a plurality of characters in said text to be played as audio, each character corresponding to a respective reading pause;
- generating a list of markers, Mki, each marker in said list of markers, Mki, corresponding to a respective character of said plurality of characters;
- generating a second text, as a function of said text to be played, suitable for being converted into an audio track;
- generating:
- an audio track as a function of said second text by means of a text-to-speech conversion system; and
- associating with each marker in said list of markers, Mki, a respective variable (t(i)) indicating the secondage at which a respective character, and hence a respective reading pause, occurs during the playing of said audio track;
- selecting a secondage associated with a respective marker, Mki;
- playing said audio track; pausing said audio track at said selected secondage;
- playing a multimedia content, ins1;
- resuming the playing of said audio track, wherein said selecting a secondage associated with a respective marker, Mki, comprises:
- providing a predetermined waiting time, Ta;
- selecting the marker, Mki, wherein the respective variable indicates the secondage closest to said predetermined waiting time, Ta.

2. The method (100) according to the preceding claim, wherein said text to be played as audio comprises a title (201); an article body (202) comprising one or more of the following elements: a period of text; a paragraph of text; and/or a bullet list;
wherein at least one of said elements includes a beginning and an end, each end being identified as a reading pause.

3. The method (100) according to claim 1 or 2, wherein said generating an audio track as a function of said second text comprises:
- dividing said second text into a plurality of text segments, each text segment terminating at a character identifying a reading pause;
- generating a plurality of audio segments, each audio segment being associated with a respective text segment.

4. The method (100) according to claim 1 or 2, wherein said generating said second text as a function of said text to be played comprises:
- inserting a secondage tag at each character associated with a marker, Mki.

5. The method (100) according to any one of the preceding claims, wherein said providing a text to be played as audio comprises:
- opening a *Uniform Resource Locator*, URL, to a web page (200);
- identifying elements of text to be played as audio on said web page (200).

6. The method (100) according to any one of the preceding claims, wherein said media content (ins1) is a video advertisement or an audio advertisement.

7. A system (300) for inserting a multimedia content (ins1) during the playing of an audio generated from a text, said system (300) comprising:
a device (10) configured to send a URL of a web page (200) containing text to be played as audio to a server (20);
said server (20) being configured for:
- receiving said URL;
- identifying a text to be played as audio on said web page (200);
- identifying a plurality of characters or tags in said text, each character or tag corresponding to a respective reading pause;
- transforming said text into a second text suitable for generating an audio track;
- generating a list of markers, Mki, each marker corresponding to a respective character of said plurality of characters;
- converting said second text into an audio track by means of a text-to-speech conversion system;
- associating with each marker in said list of markers, Mki, a respective variable, ti, indicating a secondage at which a respective character, and hence a respective reading pause, occurs during the playing of said audio track;
- sending said audio track and said list of markers, Mki, to said device (10);
wherein said device (10) is further configured for:
- selecting a time instant associated with a respective marker, Mki;
- playing said audio track; pausing said audio track at said selected time instant;
- playing a multimedia content, ins1;
- resuming the playing of said audio track from said selected time instant,
wherein said device (10) is configured for selecting the time instant associated with a respective marker, Mki, as a function of a predetermined waiting time, Ta, and for selecting the marker, Mki, wherein the respective time variable indicates the time instant closest to the predetermined waiting time, Ta.

8. The system (300) according to claim 7, wherein said identifying a plurality of characters in said text further comprises:
identifying characters or tags placed at the end of one or more of the following elements comprised in said web page: main text title; end of a text period; end of a text paragraph; and/or end of a bullet list.

9. The system (300) according to claim 7 or 8, wherein said identifying a plurality of characters in said text further comprises identifying characters associated with either a comma or an aside comprised in said text.

## Patentansprüche

1. Verfahren (100) zum Einfügen von Multimedia-Inhalten (ins1) während der Abspielung eines von einem Text erzeugten Audio-Tracks, wobei das Verfahren (100) umfasst:
- Bereitstellen einer Webseite, die einen Text umfasst, der als Audio abgespielt werden soll;
- Identifizieren einer Vielzahl von Zeichen in dem Text, der als Audio abgespielt werden soll, wobei jedes Zeichen einer jeweiligen Lesepause entspricht;
- Erzeugen einer Liste von Markern, Mki, wobei jeder Marker in der Liste von Markern, Mki, einem jeweiligen Zeichen der Vielzahl von Zeichen entspricht;
- Erzeugen eines zweiten Textes als Funktion des abzuspielenden Texts, der geeignet ist, in ein Audio-Track umgewandelt zu werden;
- Erzeugen:
- eines Audio-Tracks als Funktion des zweiten Textes mittels eines Text-zu-Sprache-Umwandlungssystems; und
- Assoziieren einer jeweiligen Variablen (t(i)), die die Sendezeit angibt, in der ein jeweiliges Zeichen und damit eine jeweilige Lesepause während der Abspielung des Audio-Tracks auftritt, mit jedem Marker in der Liste von Markern, Mki;
- Auswählen einer Sendezeit, die mit einem jeweiligen Marker, Mki, assoziiert ist;
- Abspielen des Audio-Tracks; Anhalten des Audio-Tracks an der ausgewählten zweiten Sendezeit,
- Abspielen eines Multimedia-Inhalts, ins1;
- Wiederaufnehmen der Abspielung des Audio-Tracks,
wobei das Auswählen einer zweiten Sendezeit, die mit einem jeweiligen Marker, Mki, assoziiert ist, Folgendes umfasst:
- Bereitstellen einer vorbestimmten Wartezeit, Ta,
- Auswählen des Markers, Mki, wobei die jeweilige Variable die zweite Sendezeit angibt, die der vorbestimmten Wartezeit, Ta, am nächsten liegt.

2. Verfahren (100) nach dem vorhergehenden Anspruch, wobei der als Audio abzuspielende Text einen Titel (201) umfasst; wobei ein Artikelkörper (202) eines oder mehrere der folgenden Elemente umfasst: eine Textperiode; einen Textabsatz; und/oder eine Aufzählungsliste umfasst;
wobei mindestens eines der Elemente einen Anfang und ein Ende beinhaltet, wobei jedes Ende als Lesepause identifiziert ist.

3. Verfahren (100) nach Anspruch 1 oder 2, wobei das Erzeugen eines Audio-Tracks als Funktion des zweiten Textes umfasst:
- Unterteilen des zweiten Textes in eine Vielzahl von Textsegmenten, wobei jedes Textsegment an einem Zeichen endet, das eine Lesepause identifiziert;
- Erzeugen einer Vielzahl von Audiosegmenten, wobei jedes Audiosegment mit einem jeweiligen Textsegment assoziiert ist.

4. Verfahren (100) nach Anspruch 1 oder 2, wobei das Erzeugen des zweiten Textes als Funktion des abzuspielenden Textes umfasst:
- Einfügen eines Sendezeit-Tags an jedem Zeichen, das mit einem Marker, Mki, assoziiert ist.

5. Verfahren (100) nach einem der vorhergehenden Ansprüche, wobei das Bereitstellen eines als Audio abzuspielenden Textes Folgendes umfasst:
- Öffnen einer *Uniform Resource Locator* -URL zu einer Webseite (200);
- Identifizieren von Elementen vom Text, der als Audio abgespielt werden soll, auf der Webseite (200).

6. Verfahren (100) nach einem der vorhergehenden Ansprüche, wobei der Media-Inhalt (ins1) eine Videowerbung oder eine Audiowerbung ist.

7. System (300) zum Einfügen von Multimedia-Inhalten (ins1) während der Abspielung eines von einem Text erzeugten Audios, wobei das System (300) Folgendes umfasst:
eine Vorrichtung (10), die dazu konfiguriert ist, eine URL einer Webseite (200), die Text enthält, der als Audio abgespielt werden soll, an einen Server (20) zu senden;
wobei der Server (20) konfiguriert ist, zum:
- Empfangen der URL;
- Identifizieren eines Textes, der als Audio abgespielt werden soll, auf der Webseite (200);
Identifizieren einer Vielzahl von Zeichen oder Tags in dem Text, wobei jedes Zeichen oder Tag einer jeweiligen Lesepause entspricht;
- Umwandeln des Textes in einen zweiten Text, der zum Erzeugen eines Audio-Tracks geeignet ist;
- Erzeugen einer Liste von Markern, Mki, wobei jeder Marker einem jeweiligen Zeichen der Vielzahl von Zeichen entspricht;
- Umwandeln des zweiten Textes in einen Audio-Track mittels eines Text-zu-Sprache-Umwandlungssystems;
- Assoziieren einer jeweiligen Variablen ti, die eine zweite Sendezeit angibt, in der ein jeweiliges Zeichen und damit eine jeweilige Lesepause während der Abspielung des Audio-Tracks auftritt, mit jedem Marker in der Liste von Markern, Mki;
- Senden des Audio-Tracks und der Liste von Markern, Mki, an die Vorrichtung (10);
wobei die Vorrichtung (10) ferner konfiguriert ist, zum:
- Auswählen eines Zeitpunkts, der mit einem jeweiligen Marker, Mki, assoziiert ist;
- Abspielen des Audio-Tracks; Anhalten des Audio-Tracks zu dem ausgewählten Zeitpunkt;
- Abspielen eines Multimedia-Inhalts, ins1;
- Wiederaufnehmen der Abspielung des Audio-Tracks ab dem ausgewählten Zeitpunkt,
wobei die Vorrichtung (10) zum Auswählen des mit einem jeweiligen Marker, Mki, assoziierten Zeitpunkts als Funktion einer vorbestimmten Wartezeit, Ta, und zum Auswählen des Markers, Mki, konfiguriert ist,
wobei die jeweilige Zeitvariable den Zeitpunkt angibt, der der vorbestimmten Wartezeit Ta am nächsten liegt.

8. System (300) nach Anspruch 7, wobei das Identifizieren einer Vielzahl von Zeichen in dem Text ferner Folgendes umfasst:
Identifizieren von Zeichen oder Tags, die am Ende eines oder mehrerer der folgenden Elemente platziert sind, die in der Webseite enthalten sind: Haupttexttitel; Ende einer Textperiode; Ende eines Textabsatzes; und/oder Ende einer Aufzählungsliste.

9. System (300) nach Anspruch 7 oder 8, wobei das Identifizieren einer Vielzahl von Zeichen im Text ferner das Identifizieren von Zeichen umfasst, die entweder mit einem Komma oder einem Trennstrich assoziiert sind, der im Text enthalten ist.

## Revendications

1. Procédé (100) d'insertion d'un contenu multimédia (ins1) pendant la lecture d'une piste audio générée à partir d'un texte, ledit procédé (100) comprenant :
- la fourniture d'une page web comprenant un texte à lire en tant qu'audio ;
- l'identification d'une pluralité de caractères dans ledit texte à lire en tant qu'audio, chaque caractère correspondant à une pause de lecture respective ;
- la génération d'une liste de marqueurs Mki, chaque marqueur de ladite liste de marqueurs Mki, correspondant à un caractère respectif de ladite pluralité de caractères ;
- la génération d'un second texte, en fonction dudit texte à lire, pouvant être converti en piste audio ;
- la génération :
- d'une piste audio en fonction dudit second texte au moyen d'un système de synthèse texte-parole ; et
- l'association à chaque marqueur de ladite liste de marqueurs Mki, d'une variable respective (t(i)) indiquant la seconde à laquelle un caractère respectif, et donc une pause de lecture respective, se produit pendant la lecture de ladite piste audio ;
- la sélection d'une seconde associée à un marqueur respectif Mki ;
- la lecture de ladite piste audio ; la mise en pause de ladite piste audio à ladite seconde sélectionnée ;
- la lecture d'un contenu multimédia ins1 ;
- la reprise de la lecture de ladite piste audio,
dans lequel ladite sélection d'une seconde associée à un marqueur respectif Mki, comprend :
- la fourniture d'un temps d'attente prédéterminé Ta ;
- la sélection du marqueur Mki, dans lequel la variable respective indique la seconde la plus proche du temps d'attente prédéterminé Ta.

2. Procédé (100) selon la revendication précédente, dans lequel ledit texte à lire en tant qu'audio comprend un titre (201) ; un corps d'article (202) comprenant un ou plusieurs des éléments suivants : une période de texte ; un paragraphe de texte ; et/ou une liste à puces ; dans lequel au moins un desdits éléments comprend un début et une fin, chaque fin étant identifiée comme une pause de lecture.

3. Procédé (100) selon la revendication 1 ou 2, dans lequel ladite génération d'une piste audio en fonction dudit second texte comprend :
- la division dudit second texte en plusieurs segments de texte, chaque segment de texte se terminant par un caractère identifiant une pause de lecture ;
- la génération d'une pluralité de segments audio, chaque segment audio étant associé à un segment de texte respectif.

4. Procédé (100) selon la revendication 1 ou 2, dans lequel la génération dudit second texte en fonction dudit texte à lire comprend :
- l'insertion d'une étiquette de seconde à chaque caractère associé à un marqueur Mki.

5. Procédé (100) selon l'une quelconque des revendications précédentes, dans lequel ladite fourniture d'un texte à lire en tant qu'audio comprend :
- l'ouverture d'une *Uniform Resource Locator* URL, vers une page web (200) ;
- l'identification des éléments de texte à lire en tant qu'audio sur ladite page web (200).

6. Procédé (100) selon l'une quelconque des revendications précédentes, dans lequel ledit contenu média (ins1) est une publicité vidéo ou une publicité audio.

7. Système (300) d'insertion d'un contenu multimédia (ins1) pendant la lecture d'un audio généré à partir d'un texte, ledit système (300) comprenant :
un dispositif (10) configuré pour envoyer à un serveur (20) une URL d'une page web (200) contenant un texte à lire en tant qu'audio ;
ledit serveur (20) étant configuré pour :
- recevoir ladite URL ;
- identifier un texte à lire en tant qu'audio sur ladite page web (200) ;
identifier une pluralité de caractères ou d'étiquettes dans ledit texte, chaque caractère ou étiquette correspondant à une pause de lecture respective ;
- transformer ledit texte en un second texte adapté à la génération d'une piste audio ;
- générer une liste de marqueurs Mki, chaque marqueur correspondant à un caractère respectif de ladite pluralité de caractères ;
- convertir ledit second texte en une piste audio au moyen d'un système de synthèse texte-parole ;
- associer à chaque marqueur de ladite liste de marqueurs Mki, une variable respective ti, indiquant une seconde à laquelle un caractère respectif, et donc une pause de lecture respective, se produit pendant la lecture de ladite piste audio ;
- envoyer ladite piste audio et ladite liste de marqueurs Mki, audit dispositif (10) ;
dans lequel ledit dispositif (10) est en outre configuré pour :
- sélectionner un instant associé à un marqueur respectif Mki ;
- lire ladite piste audio ; mettre en pause ladite piste audio audit instant sélectionné ;
- lire un contenu multimédia ins1 ;
- reprendre la lecture de ladite piste audio à partir dudit instant sélectionné,
dans lequel ledit dispositif (10) est configuré pour sélectionner l'instant associé à un marqueur respectif Mki, en fonction d'un temps d'attente prédéterminé Ta, et pour sélectionner le marqueur Mki,
dans lequel la variable temporelle respective indique l'instant le plus proche du temps d'attente prédéterminé Ta.

8. Système (300) selon la revendication 7, dans lequel ladite identification d'une pluralité de caractères dans ledit texte comprend en outre :
des caractères d'identification ou des étiquettes placés à la fin d'un ou de plusieurs des éléments suivants de ladite page web : titre du texte principal ; fin d'une période de texte ; fin d'un paragraphe de texte ; et/ou fin d'une liste à puces.

9. Système (300) selon la revendication 7 ou 8, dans lequel ladite identification d'une pluralité de caractères dans ledit texte comprend en outre l'identification de caractères associés soit à une virgule, soit à un aparté compris dans ledit texte.
